# EUROPEAN PATENT SPECIFICATION

(11) **EP 1 996 828 B1**
(45) Date of publication and mention of the grant of the patent: **29.07.2009**
(21) Application number: 07732101.6
(22) Date of filing: 21.03.2007
(51) Int. Cl.: F16D 65/12, F16D 65/853

(54) **LIQUID-COOLED DISC BRAKES**
FLÜSSIGKEITSGEKÜHLTE SCHEIBENBREMSEN
FREINS À DISQUE REFROIDIS PAR LIQUIDE

(30) Priority: 23.03.2006 GB 0605769
(43) Date of publication of application: 03.12.2008
(73) Proprietor: QinetiQ Limited, London, SW1E 6PD (GB)
(72) Inventor: THOMPSON, Robert, William, Farnborough, Hampshire GU14 0LX (GB)
(74) Representative: Obee, Robert William
(86) International application number: PCT/GB2007/001037
(87) International publication number: WO 2007/107771

(56) References cited:
- DE-A1- 3 733 438
- DE-A1- 19 722 254
- US-A- 5 358 077
- US-B1- 6 491 139

## Description

The present invention relates to disc brakes and more particularly to dry friction, internally liquid-cooled disc brakes and a novel form of liquid-cooled disc for the same. Brakes incorporating discs according to the invention may be found useful for braking axles, shafts, wheels or the like in a variety of vehicular applications or in other machinery, including dynamometers, but particularly for heavy vehicles such as armoured military vehicles or large goods vehicles. One application comprises the brakes in a drive configuration for a battle tank, bulldozer or other skid-steered vehicle as described in WO-02/083483 or WO-2006/021745.

The most commonly used braking systems for vehicles employ dry friction, externally air-cooled disc brakes. This type of brake relies on having a large enough brake disc to absorb the requisite energy to meet the braking duty cycle with an acceptable temperature rise, and to have sufficient surface area to dissipate the heat generated by braking, into the surrounding air, in a reasonable time scale. For most road going vehicles where the discs are mounted at the wheel hubs there is sufficient space and airflow for the brake to meet the required performance. However if the space available for the brake is small and if there is insufficient airflow available for cooling, for example where the brake is mounted inside the vehicle, an externally air-cooled brake may not give the required performance. The main limitation to performance of such a brake is the rate of cooling achievable. Air is a relatively poor cooling medium due to its low density and the low rate of heat transfer from the disc surface to the air. This cooling limitation can be overcome by the use of liquid cooling.

Some vehicles therefore use wet friction brakes. This type of brake has a brake disc and friction material typically mounted inside a gearbox or axle casing to which cooling oil is supplied by a circulating pump, and is commonly used on off-road vehicles such as dump trucks. The wet brake has the advantage that it is not prone to contamination from the external environment, being contained inside a transmission casing. However in a high speed application the wet brake has the disadvantage that there is potentially a high power loss, when not braking, due to viscous friction of the oil between the disc(s) and friction material. This can be overcome by supplying cooling oil only when the brake is in operation, but at increased complexity of the system. Another disadvantage is that for a high performance vehicle the brake disc surface temperature may exceed the working temperature of the oil used, causing oil contamination. Also any brake wear will result in contamination of the oil, which may also be required to lubricate gears and/or bearings of the transmission.

Another type of brake is known comprising an internally liquid-cooled disc acted on by dry friction material. An example is shown in US-5358077 where there is a rotating disc and associated callipers equipped with friction material in a generally conventional disc brake arrangement but where water from the engine cooling system is circulated within the disc. A plurality of radial tubes take the water from an inlet at the hub of the disc to a plurality of cooling cells within the disc and the heated liquid and/or vapour exits through an outlet at the hub of the disc. The water-cooled disc is itself a one piece metal casting, preferably of aluminium reinforced with silicon carbide particles. Because the disc is the rotating part of the assembly, however, this necessitates a rotary joint with two rubbing seals to carry the cooling liquid to and from the disc, which is a potential source of leakage.

Another example is shown in US-6491139 where there are two non-rotating internally liquid-cooled discs, one to each side of a rotating disc covered with friction material which is carried by the shaft to be braked, and callipers to clamp the whole assembly together when the brake is applied. This has the advantage over the assembly of US-5358077 that the cooled discs are essentially stationary, so simplifying the sealing of the coolant inlet and outlet pipe connections.

Whether rotating or stationary in use, the purpose of the liquid-cooled disc structures in such brakes is to transfer the heat which is generated by friction during braking events to the water or other liquid which flows through such discs and carries it away for dissipation through a radiator or the like. In this respect the prior art discs typically comprise a monolithic metal wall which is contacted on its outside surface by complementary friction material when the brake is applied and which is in contact on its inside surface with the flowing coolant. We have found, however, that the combination of thermal properties which best suits the performance of a liquid-cooled brake disc, particularly in the context of heavy vehicles which may involve peak braking powers of several megawatts, is not readily achievable with prior art discs.

That is to say, it is important for the outer surface portion of the structure of the disc, which is contacted by the friction material when braking, to have sufficient thermal conductivity to avoid excessive surface temperatures. At the same time, a too-rapid rate of heat transfer through the disc to the cooling liquid can result in boiling of the bulk of the liquid within the disc, leading to excessive pressurisation of the system and possible coolant loss.

With the foregoing in mind, in one aspect the present invention resides in a brake disc comprising: a first portion including an outer surface adapted to be in contact with friction material in order to brake a member with which said material or disc rotates, and having a predetermined thermal conductance and heat capacity for the absorption of heat generated during braking; a second portion defining a chamber for the circulation of cooling liquid; and a thermally insulative layer between said first and second portions, for controlling the rate of heat transfer from said first portion to such cooling liquid.

In use of a disc according to the invention, the energy from individual braking events can be stored as heat in the first (outer) portion of the disc over a relatively short period (say 5 seconds), and then dissipated as heat to the cooling liquid over a relatively longer period (say 30 seconds) at a rate dependent on the conductance of said thermally insulative layer. In this way the risk of boiling the bulk of the liquid within the disc is diminished while only a moderate liquid flow rate through the disc is required, and while the thermal capacity of the outer portion is sufficient to absorb the heat of a braking event without an excessive temperature rise.

In one embodiment, the first portion of the disc is of a material selected for surface contact with available brake friction material and a sufficiently high thermal conductivity, specific heat capacity and melting point to function as required (such as cast iron, steel or an aluminium metal matrix composite), the second portion of the disc which defines the chamber for circulation of the cooling liquid is of a material selected for efficient heat conduction and corrosion resistance to the coolant (such as aluminium or stainless steel), and those portions are separated by a thin layer of thermal insulation (for example a disc of ceramic or simply an air gap) to moderate the rate of heat transfer from the first to the second portion.

The liquid circulated through a disc according to the invention may be water or oil for example. Water is the better coolant but oil can be used up to higher operating temperatures. For operation in low ambient temperature conditions water can be used with a proportion of ethylene glycol, propylene glycol or other conventional antifreeze, or even pure glycol can be used for extreme low temperature performance.

In another aspect the invention resides in a brake assembly comprising: at least one liquid-cooled brake disc as defined above; one or more friction discs having at least one friction surface, for contact with the or a respective said outer surface of said brake disc(s); and means for forcing contact between the or respective said frictions surface(s) and the or respective said outer surface(s).

A preferred embodiment of such an assembly comprises a non-rotating said liquid-cooled brake disc having respective said outer surfaces disposed on opposite sides of its said chamber; and two said friction discs rotatable with a member to be braked, one such friction disc disposed to each side of said non-rotating disc.

For the avoidance of doubt, as used herein, and particularly in the appended claims, the term "disc" does not necessarily imply a complete body of revolution but, where the context so admits, may also include a structure in the form of one or more sectors.

These and other aspects of the present invention will now be more particularly described, by way of example, with reference to the accompanying drawings in which:- .
Figure 1 is a diagrammatic illustration of a drive configuration for a skid steered vehicle in which brake assemblies according to the invention may be used;
Figure 2 is a pictorial view of one embodiment of a brake assembly according to the invention;
Figure 3 is a pictorial view of one embodiment of a liquid-cooled brake disc according to the invention, as used in the assembly of Figure 2;
Figure 4 is a side elevation of the brake disc of Figure 3;
Figure 5 is a section on the line V-V of Figure 4; and
Figures 6 and 7 are simulated temperature curves on braking for two examples of such a disc.

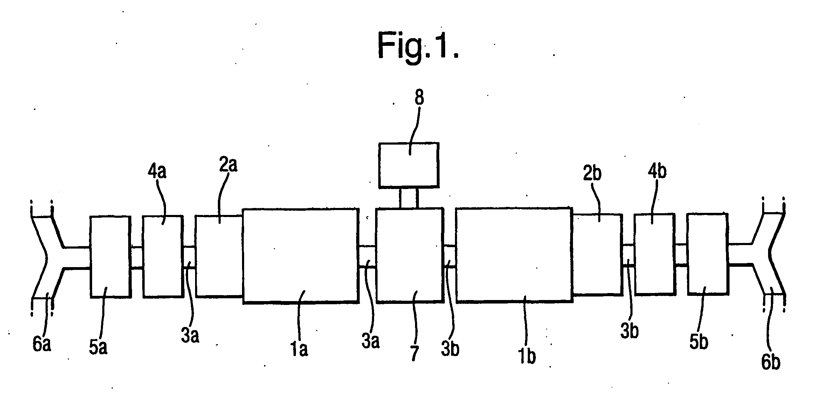

Referring to Figure 1, this illustrates diagrammatically, one form of drive configuration with which brake assemblies and discs in accordance with the present invention may be found particularly useful, being a track drive arrangement for a skid steered vehicle according to WO-02/083483 or WO-2006/021745. It is to be understood, however, that the present invention is more generally applicable to the braking of axles, shafts, wheels or the like in any circumstances where internal liquid cooling is desirable.

In Figure 1 a transverse drive arrangement comprises two electric propulsion motors 1 a and 1 b with associated gear change units 2a and 2b turning drive shafts 3a and 3b. Outboard of these units the transmission includes in each case a brake 4a, 4b and final drive gear reduction 5a, 5b, all encased within the vehicle hull, leading to respective track drive sprockets 6a and 6b at opposite sides of the vehicle: Inboard the drive shafts 3a and 3b are coupled to a controlled differential 7 driven by an electric steer motor 8 for steering control of the vehicle as described in WO-02/083483 and WO-2006/021745.

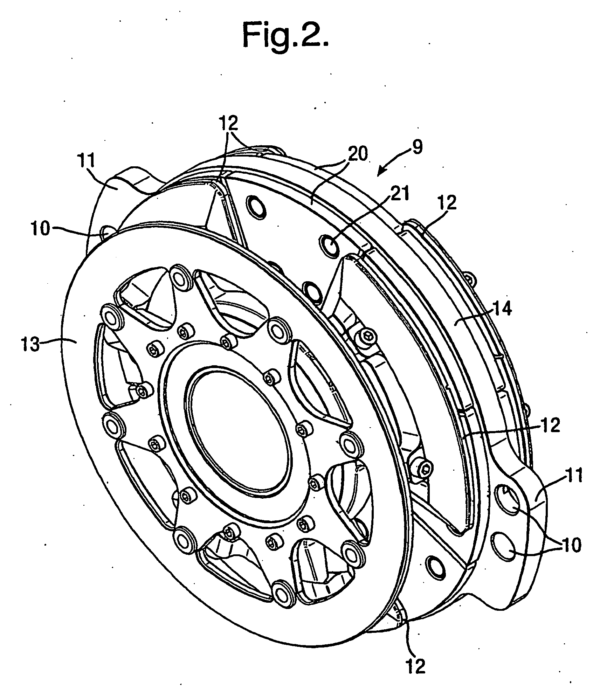

Figure 2 illustrates an embodiment of an assembly according to the present invention for braking a rotatable shaft (itself not seen in the Figure). In the context of Figure 1, therefore, an assembly of this kind would be used on each side of the transmission as the brake 4a, 4b acting on the respective drive shaft 3a, 3b. It comprises a central compound brake disc 9 to be more particularly described below which surrounds the shaft to be braked with clearance and which is essentially stationary (relative to the vehicle) in use - being mounted on fixed pins (not shown) extending through holes 10 in external flanges 11 of the disc with a slight axial float. Disposed to either side of the stationary disc are a pair of rotary discs, each splined onto the .. shaft to turn with the same and carrying respective sets of pads 12 of conventional friction material adjacent to the opposite major faces of the disc 9. The pads 12 as shown are in the form of discrete sectors but could alternatively be in the form of complete discs. When the brake is applied, an actuator as described in our copending United Kingdom patent application no. 0620577.7, including a control brake disc 13 but details of which are not otherwise shown in Figure 2, forces the discs carrying pads 12 axially towards each other along the shaft, thus clamping the fixed disc 9 between them and braking the shaft by virtue of the frictional contact between the pads 12 and the confronting surfaces of the disc 9.

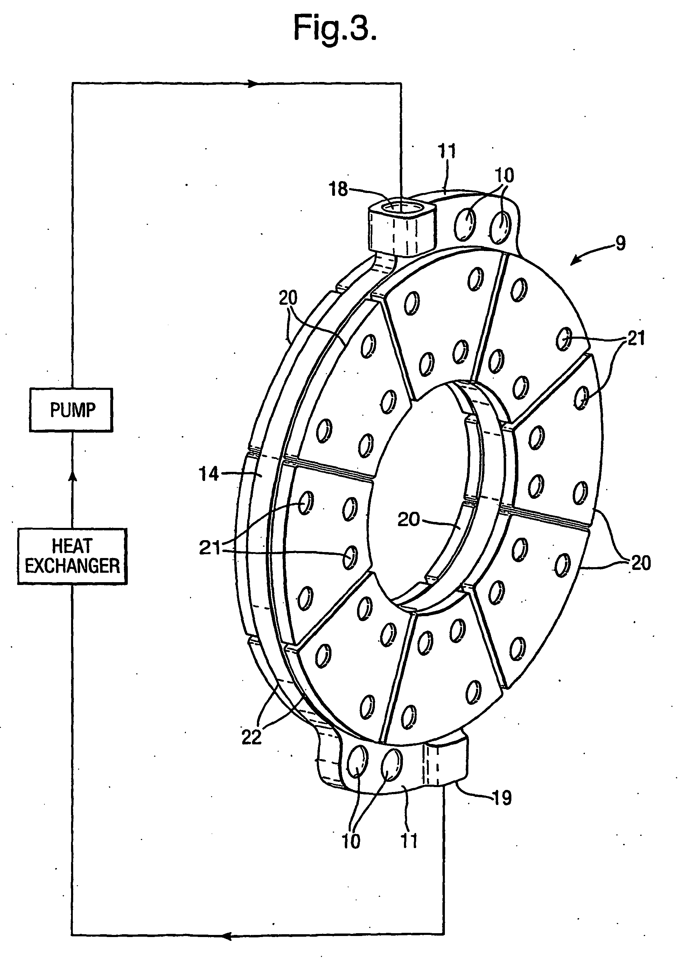

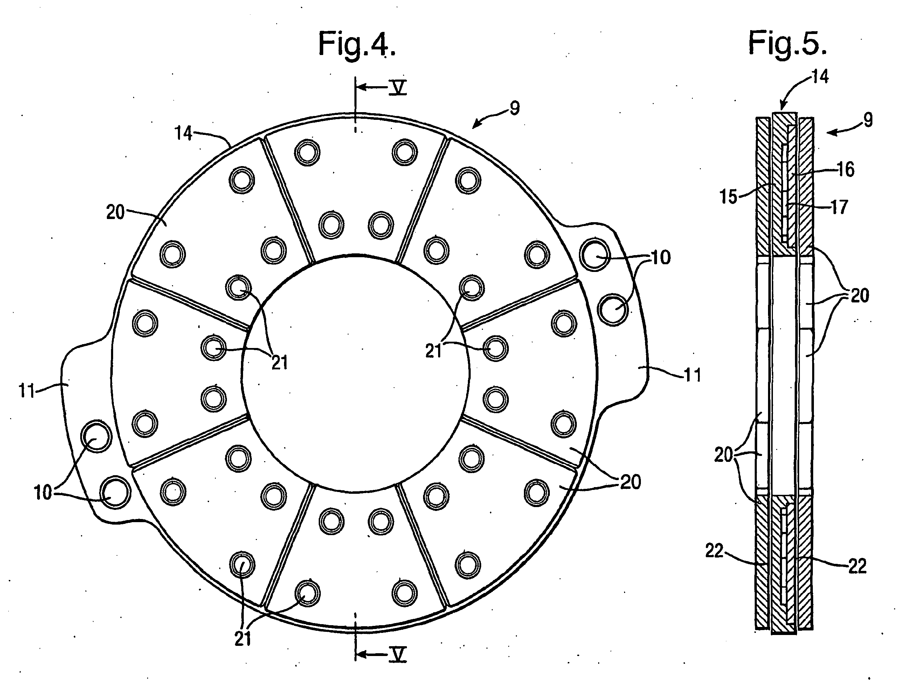

Referring now more particularly to Figures 3 to 5, the disc 9 comprises a central annular cooling plate 14 composed of two aluminium discs 15 and 16 (Figure 5) which define between them an internal chamber 17 for the circulation of liquid coolant from an inlet 18 to an outlet 19 (inlet and outlet only shown in Figure 3). In the illustrated embodiment the inlet and outlet are located diametrically opposite across the disc and the coolant flows in two separate streams between them through respective semi-circumferential branches of the chamber 17. Alternatively there may be unidirectional coolant flow through a single circumferential chamber with the inlet and outlet located adjacent to each other at its respective ends. In use, and as illustrated schematically in Figure 3, the coolant is circulated by a pump through a closed circuit including a radiator or other heat exchanger through which heat absorbed by the coolant from the disc 9 is given up.

To each side of the plate 14 the disc 9 comprises an assembly of eight cast iron sectors 20 which collectively define the opposite outer surfaces of the disc for contact by the friction pads 12. Each sector 20 is mounted on four pins 21 projecting from the respective disc 15 or 16 with clearance between each pin and sector and between each sector and its neighbours, to allow for thermal expansion of the sectors without cracking. Associated shims, or merely surface roughness of the components, set a small air gap 22 (Figure 5) in the region of 0.1 mm or less between each set of sectors 20 and the plate 14.

The design of the disc is such as to provide that the energy from an individual braking event is first stored as a rise in temperature of the cast iron sectors 20 and then removed over a longer period by steady transfer through the plate 14 to the liquid coolant. The rate of heat transfer from the sectors 20 to the plate 14 and thence to the coolant is effectively determined by the intervening air gaps 22, the thermal conductances of which are lower than those of the metal components which they separate. In particular the thickness of the gaps 22 is set to ensure that boiling of the bulk of the liquid within chamber 17 is avoided (although some boiling of the liquid at the surfaces of the chamber walls with condensation of the bubbles back into the flow on exiting the disc is acceptable and may facilitate a desirable rate of cooling without an inordinate coolant flow rate).

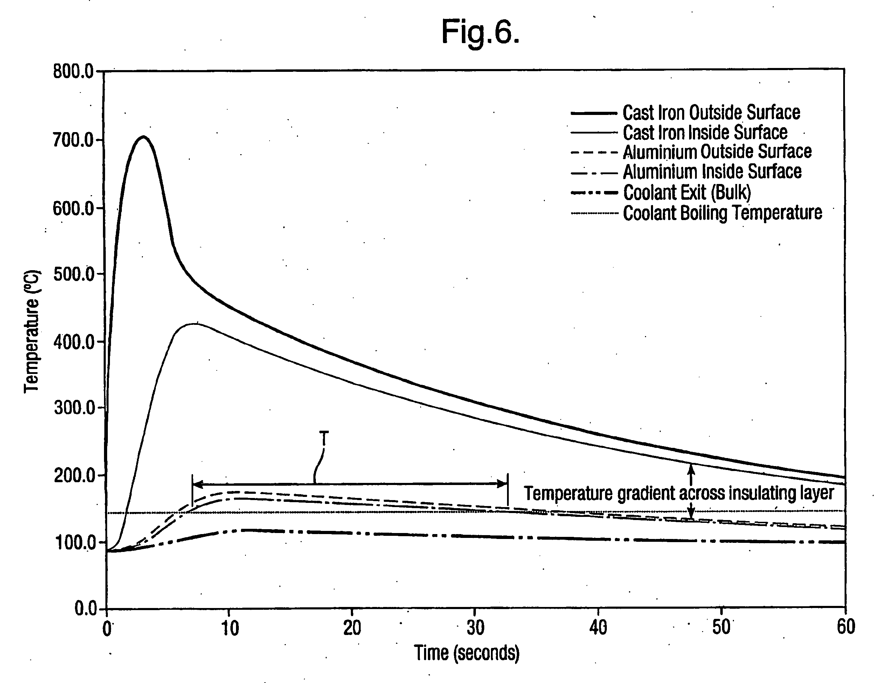

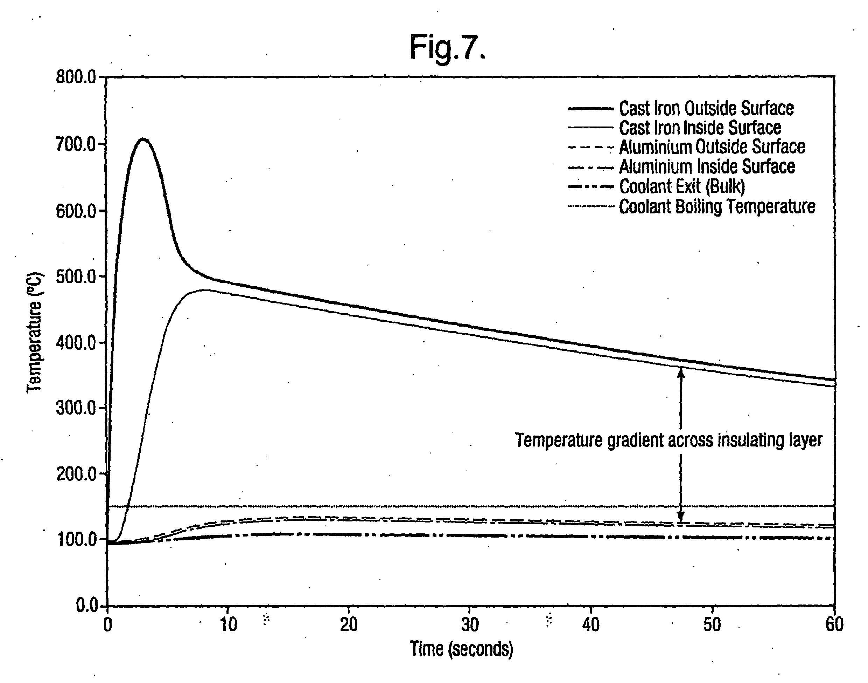

Figures 6 and 7 are temperature curves derived from simulation of the effects of maximum rate braking for two typical examples of a brake disc as described above with reference to Figures 3-5. In each case these show the temperature profiles over a one minute period from brake application at various positions within the disc, namely at the outer and inner surfaces respectively of the cast iron sectors 20, the outer and inner surfaces respectively of the aluminium cooling plate 14, and the bulk temperature of the coolant at the outlet 19 from the chamber 17. The boiling temperature of the coolant (assumed to be a water/propylene glycol mixture) at the prevailing pressure within chamber 17 is indicated by the dotted line at 150°C. The simulated conditions differ between the two Figures only in the effective degree of thermal insulation provided by the widths of the air gaps 22 between the sectors 20 and cooling plate 14, this being higher for Figure 7 (gap width of 0.1 mm) than for Figure 6 (gap width of 0.02mm).

From these Figures it can be clearly seen that in each case the cast iron sectors 20 experience an initial and rapid temperature rise (up to a maximum of approximately 700°C at the outer surface) when the brake is applied, followed by a more gradual decrease as heat is dissipated through the cooling plate 14 to the flowing liquid coolant, the cooling rate for the disc as a whole clearly being slower in Figure 7 than Figure 6. In Figure 7 it is also seen that the temperature at the inside surface of the cooling plate 14 remains below the boiling temperature of the coolant at all times, In Figure 6 the inside surface temperature of the cooling plate rises above the coolant boiling temperature for a period T, meaning that some boiling at that surface will occur, although it is also seen that the bulk temperature of the coolant on exist still remains below boiling throughout.

Although described above in terms of a brake assembly with a stationary liquid-cooled disc and rotating friction discs it is also within the scope of the invention for the friction disc(s) to be stationary and the liquid-cooled disc to rotate. Furthermore while the illustrated embodiment has friction discs on both sides of the liquid-cooled disc an embodiment with only one friction disc and one liquid-cooled disc is also possible. Equally there may be embodiments with two or more liquid-cooled discs alternating with friction discs and an actuator to clamp the whole series together when the brake is applied.

## Claims

1. A liquid-cooled brake disc (9) **characterised by**: a first portion (20) including an outer surface adapted to be in contact with friction material in order to brake a member with which said material or disc rotates, and having a predetermined thermal conductance and heat capacity for the absorption of heat generated during braking; a second portion (14) defining a chamber (17) for the circulation of cooling liquid; and a thermally insulative layer (22) between said first (20) and second (14) portions, for controlling the rate of heat transfer from said first portion to such cooling liquid.

2. A brake disc according to claim 1 wherein said thermally insulative layer (22) is an air gap.

3. A brake disc according to claim 1 or claim 2 wherein said first portion (20) is of cast iron, steel or an aluminium metal matrix composite.

4. A brake disc according to any preceding claim wherein said second portion (14) is of aluminium or stainless steel.

5. A brake disc according to any preceding claim wherein said first portion (20) is composed of a plurality of sectors each mounted with freedom for independent thermal expansion.

6. A brake disc according to any preceding claim comprising respective said first portions (20) and insulative layers (22) disposed on opposite sides of a said second portion (14).

7. A brake assembly comprising: at least one liquid-cooled brake disc (9) according to any preceding claim; one or more friction discs having at least one friction surface (12), for contact with the or a respective said outer surface of said brake disc(s); and means for forcing contact between the or respective said friction surface(s) and the or respective said outer surface(s).

8. A brake assembly according to claim 7 comprising a non-rotating said liquid-cooled brake disc (9) having respective said outer surfaces disposed on opposite sides of its said chamber; and two said friction discs rotatable with a member to be braked, one such friction disc disposed to each side of said non-rotating disc.

## Patentansprüche

1. Flüssigkeitsgekühlte Bremsscheibe (9), **gekennzeichnet durch** einen ersten Teil (20) mit einer äußeren Oberfläche, die so ausgebildet ist, dass sie mit Reibungsmaterial in Kontakt kommen kann, um ein Element zu bremsen, mit dem sich das Reibungsmaterial oder die Bremsscheibe dreht, und mit einer vorgegebenen Wärmeleitfähigkeit und Wärmekapazität zur Absorption von während eines Bremsens erzeugter Wärme, einem zweiten Teil (14), der eine Kammer (17) zur Zirkulation von Kühlflüssigkeit vorgibt, und
eine thermisch isolierende Schicht (22) zwischen dem ersten Teil (20) und dem zweiten Teil (14) zur Kontrolle der Wärmeübertragungsrate der Wärmeübertragung vom ersten Teil zu einer solchen Kühlflüssigkeit.

2. Bremsscheibe nach Anspruch 1, bei der die thermisch isolierende Schicht (22) ein Luftspalt ist.

3. Bremsscheibe nach Anspruch 1 oder 2, bei welcher der erste Teil (20) aus Gusseisen, Stahl oder einem Kompositmaterial mit einer Metallmatrix aus Aluminium besteht.

4. Bremsscheibe nach einem der vorhergehenden Ansprüche, bei welcher der zweite Teil (14) aus Aluminium oder Edelstahl besteht.

5. Bremsscheibe nach einem der vorhergehenden Ansprüche, bei welcher der erste Teil (20) aus mehreren Sektoren aufgebaut ist, die zur unabhängigen thermischen Ausdehnung jeweils in einem Abstand voneinander angebracht sind.

6. Bremsscheibe nach einem der vorhergehenden Ansprüche, bei der die ersten Teile (20) und die isolierenden Schichten (22) auf entgegengesetzten Seiten eines zweiten Teils (14) angeordnet sind.

7. Bremsenanordnung, die umfasst:
mindestens eine flüssigkeitsgekühlte Bremsscheibe (9) nach einem der vorhergehenden Ansprüche,
eine oder mehrere Friktionsscheiben mit mindestens einer Reibungsoberfläche (12) zum Kontakt mit der oder einer entsprechenden äußeren Oberfläche der Bremsscheibe(n) und
eine Einrichtung zum erzwungenen Kontakt zwischen der betreffenden Reibungsoberfläche oder den betreffenden Reibungsoberflächen und der betreffenden äußeren Oberfläche oder den betreffenden äußeren Oberflächen.

8. Bremsenanordnung nach Anspruch 7, die aufweist:
eine sich nicht-drehende flüssigkeitsgekühlte Bremsscheibe (9), bei der die betreffenden äußeren Oberflächen auf entgegengesetzten Seiten der Kammer vorgesehen sind,
und
zwei Friktionsscheiben, die sich mit einem zu bremsenden Element drehen können, wobei auf jeder Seite der sich nichtdrehenden Scheibe eine solche Friktionsscheibe angeordnet ist.

## Revendications

1. Disque de frein refroidi par liquide (9) **caractérisé par** une première portion (20) incluant une surface extérieure adaptée pour être en contact avec une garniture de friction afin de freiner un élément avec lequel ladite garniture ou ledit disque tourne, et ayant une conductance thermique et une capacité thermique prédéterminées pour l'absorption de la chaleur générée durant le freinage ; une deuxième portion (14) définissant une chambre (17) pour la circulation du liquide de refroidissement ; et une couche isolante (22) entre ladite première portion (20) et ladite deuxième portion (14) pour contrôler la vitesse de transfert de chaleur de ladite première portion vers le liquide de refroidissement.

2. Disque de frein selon la revendication 1, dans lequel ladite couche isolante (22) est un entrefer.

3. Disque de frein selon la revendication 1 ou 2, dans lequel ladite première portion (20) est constituée de fonte, d'acier ou d'un composite à matrice d'aluminium métallique.

4. Disque de frein selon l'une quelconque des revendications précédentes, dans lequel ladite deuxième portion (14) est en aluminium ou en acier inoxydable.

5. Disque de frein selon l'une quelconque des revendications précédentes, dans lequel ladite première portion (20) est composée d'une pluralité de secteurs montés chacun librement pour obtenir une dilatation thermique indépendante.

6. Disque de frein selon l'une quelconque des revendications précédentes, comprenant lesdites premières portions (20) et lesdites couches isolantes (22) disposées respectivement sur des côtés opposés d'une dite deuxième portion (14).

7. Ensemble de frein comprenant : au moins un disque de frein refroidi par liquide (9) selon l'une quelconque des revendications précédentes ; un ou plusieurs disques à friction ayant au moins une surface de friction (12) devant entrer en contact avec la surface extérieure ou avec une surface extérieure respective parmi lesdites surfaces extérieures dudit ou desdits disques de frein ; et un moyen pour créer un contact forcé entre la surface de friction ou une surface respective de friction parmi lesdites surfaces de friction et la surface extérieure ou la surface extérieure respective parmi lesdites surfaces extérieures.

8. Ensemble de frein selon la revendication 7, comprenant un dit disque de frein non rotatif refroidi par liquide (9), dont lesdites surfaces extérieures respectives sont disposées sur des côtés opposés de sa dite chambre ; et deux dits disques à friction pouvant tourner avec un élément devant être freiné, un desdits disques à friction étant disposé de chaque côté dudit disque non rotatif.
